# EUROPEAN PATENT APPLICATION

(11) **EP 2 336 630 A1**
(43) Date of publication of application: **22.06.2011**
(21) Application number: 09817554.0
(22) Date of filing: 15.06.2009
(51) Int. Cl.: F21S 2/00, F21V 7/00, G02F 1/13357, F21Y 101/02

(54) **ILLUMINATING DEVICE, PLANAR LIGHT SOURCE DEVICE AND LIQUID CRYSTAL DISPLAY DEVICE**

(30) Priority: 30.09.2008 JP 2008254397
(71) Applicant: Sharp Kabushiki Kaisha, Osaka-shi, Osaka 545-8522 (JP)
(72) Inventor: KASAI, Nobuhiro, Osaka-shi, Osaka 545-8522 (JP)
(74) Representative: Müller-Boré & Partner Patentanwälte
(86) International application number: PCT/JP2009/060899
(87) International publication number: WO 2010/038516

(57) **Abstract**

Each of first reflecting sheets (3) is provided so as to cover that opposite surface of a corresponding lightguide (5) which is opposite to a light exit surface (5c) of the corresponding lightguide (5). Each of second reflecting sheets (4) is provided, on that opposite surface of a corresponding first reflecting sheet (3) which is opposite to a surface thereof facing a corresponding lightguide 5, over a corresponding first gap (1), each of which first gaps (1) is defined between adjacent two of the lightguides (5) that do not to overlap each other. Each of the second reflecting sheets (4) covers a region where no first reflecting sheet (3) is provided in the corresponding first gap (1), and extended over the adjacent two of the lightguides (5). Even if a gap (1) is defined between adjacent two of the lightguides (5), this makes it possible to realize an illumination device (31) which is slim and has improved uniformity of luminance on the light-emitting surface although first reflecting sheets (3) are provided to the plurality of lightguides (5), respectively.

## Description

### Technical Field

The present invention relates to an illumination device and a surface light source device each of which is used as a backlight of a liquid crystal display apparatus, and to a liquid crystal display apparatus having the surface light source device.

### Background Art

Recently, liquid crystal display apparatuses rapidly diffuse in place of display apparatuses having cathode-ray tubes (CRTs). Advantages of the liquid crystal display apparatuses such as energy saving, slimness, and lightness in weight are taken so that the liquid crystal display apparatuses are widely provided to liquid crystal televisions, monitors, portable phones, etc. Enhancement of the advantages includes improvement of illumination devices (so-called backlight) each of which is provided to a back part of a liquid crystal display apparatus.

Backlights which are illumination devices are broadly classified into a side light-type (also referred to as edge-light type) and a direct-type. In a side light-type illumination device, a light guide plate is provided behind a liquid crystal display panel, and a light source is provided to an end of the light guide plate. Light emitted from the light source is reflected by the light guide plate so that the liquid crystal display panel is irradiated with the light indirectly and uniformly. Such a structure makes it possible to realize a slim illumination device although its luminances are low. For this reason, side light-type illumination devices are mainly adopted in small or medium-sized liquid crystal displays such as those of portable phones and notebook PCs.

In a direct-type illumination device, a plurality of light sources are arrayed behind a liquid crystal display panel so as to directly irradiate the liquid crystal display panel with light. Accordingly, a high luminance can be easily obtained even if a screen is large. Therefore, direct-type illumination devices are mainly adopted in large liquid crystal display apparatuses of not less than 20 inches. However, current direct-type illumination devices have thicknesses of approximately 20 mm to 40 mm. This is an obstacle to further slimming down of display apparatuses.

A further slimming down of a large liquid crystal display can be realized by reducing a distance between the light source and the liquid crystal display panel. In this case, however, uniformity of luminance of the illumination device cannot be obtained without many light sources. On the other hand, the more light sources, the higher the costs. Therefore, hoped is the development of an illumination device which does not have many light sources but is slim and excellent in uniformity of luminance.

As a solution to these problems, attempts have been made to slim a large liquid crystal display apparatus by adopting an illumination device in which a plurality of lightguide units are arrayed.

As illustrated in (a) of Fig. 8, Patent Literature 1 discloses a surface light source device 201 having a plurality of LED array light sources 202. Each of the plurality of LED array light sources 202 has LEDs which are parallelly arranged at predetermined intervals and which generate monochromatic rays of light which have respective different wavelengths.

A first lightguide 204 in the surface light source device 201 has a wedge-shaped cross-section having a horizontal top surface and a bottom surface inclined with respect to the top surface. A thicker one of two lateral ends of the first lightguide 204 faces a corresponding one of the plurality of LED array light sources 202 via a first monochromatic light mixing member (lightguide section) 208.

A second lightguide 206 has a wedge-shaped cross-section having a horizontal bottom surface and a top surface inclined with respect to the bottom surface. A thicker one of two lateral ends of the second lightguide 206 faces a corresponding one of the plurality of LED array light sources 202 via a second monochromatic light mixing member (lightguide section) 210 on an opposite side to a corresponding first lightguide 204.

Further, a light component which heads upward to the outside while transmitting through the first monochromatic light mixing member (lightguide section) 208 or the second monochromatic light mixing member (lightguide section) 210 is reflected back by a reflector 214 to the first monochromatic light mixing member (lightguide section) 208 or the second monochromatic light mixing member (lightguide section) 210. On the other hand, a light component which heads downward to the outside while transmitting through the first monochromatic light mixing member (lightguide section) 208 or the second monochromatic light mixing member (lightguide section) 210 is reflected back by a reflecting plate 222 to the first monochromatic light mixing member (lightguide section) 208 or the second monochromatic light mixing member (lightguide section) 210.

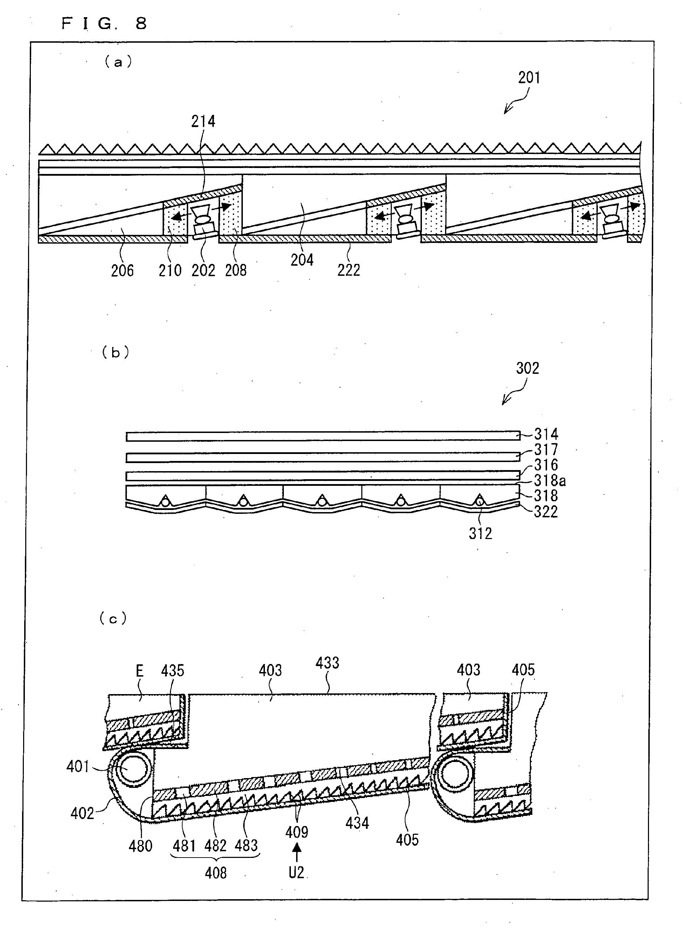

Further, Patent Literature 2 discloses a surface light source device 302 having a plurality of transparent light guide plate units 318. As illustrated in (b) of Fig. 8, each of the plurality of light guide plate units 318 has: a rectangular light exit surface 318a; a thickened portion which is located in a substantial central area of the rectangular light exit surface 318a so as to be substantially parallel with one side thereof; a pair of thinned ends which are substantially parallel with the thickened portion; a parallel groove which is provided in a substantial center of the thickened portion on a side opposite to the rectangular light exit surface 318a and which houses a rod-like light source; and an inclined back surface section defining an inclined back surface which inclined back surface section decreases in its thickness from the thickened portion to the thinned ends on both sides. Respective thinned ends of two adjacent light guide plate units 318 are joined to each other. Respective rectangular light exit surfaces 318a of the joined light guide plate units 318 are located on the same plane.

The surface light source device 302 further has light sources 312, a diffusing sheet 314, a diffusing plate 316, a prism sheet 317, and reflecting sheets 322.

The reflecting sheets 322 are for reflecting light leaked from the back surfaces of the light guide plate units 318 so that the reflected light re-enters the light guide plate units 318. Thus, the reflecting sheets 322 make it possible to increase a utilization efficiency of light. Patent Literature 2 teaches that the reflecting sheets 322 are formed so as to cover the back surfaces (inclined surfaces) of the light guide plate units 318.

Patent Literature 3 discloses a tandem-type surface light source device in which as illustrated in (c) of Fig. 8, a plurality of surface emitting units U2 are arrayed so as to be parallel with each other. Each of the plurality of surface emitting units U2 has a platelike lightguide 403 having a refractive index of "ng." A leaked light modulator 408 provided on a back surface 434 of each of the lightguides 403 has: a composite layer 480 having a first refractive index region 481 and a second refractive index region 482; and a third refractive index layer 483. Provided on a surface of the leaked light modulator 408 is a prism array 409 having a plurality of prisms. Patent Literature 3 discloses that the arrangement makes it possible to increase a luminance in a required direction in a luminance distribution on a light-emitting surface, and in a case where the tandem-type surface light source device is used as a backlight of a display apparatus, quality of a display image can be improved.

Further, a light-reflector element 405 is provided so as to be adjacent to the prism array 409. In other words, the light-reflector element 405 is provided so as to face the third refractive index layer 483 in which the prism array 409 is provided. Patent Literature 3 discloses: an arrangement such that the light-reflector element 405 is connected with a reflector 402 for a light source 401 so as to be integrated therewith; an arrangement such that the light-reflector element 405 is extended to a side end of a tip section of each lightguide 403 having the leaked light modulator 408 etc.; and an arrangement such that the reflector 402 for the light source 401, which is integrated with the light-reflector element 405, is extended to a bottom surface of a cutout step 435 (cutout step 435 has a function of admitting therein and supporting a tip section E made up of: a lightguide 403, a leaked light modulator 408, and a prism array 409 of an adjacent surface emitting unit which tip section E is on an opposite side with respect to an incident end surface of the lightguide 403) of a corresponding lightguide 403.

### Citation List

Patent Literature 1
   Japanese Patent Application Publication, Tokukai, No. 2006-269365 A (Publication Date: October 5, 2006)
Patent Literature 2
   Japanese Patent Application Publication, Tokukai, No. 2006-301518 A (Publication Date: November 2, 2006)
Patent Literature 3
   Japanese Patent Application Publication, Tokukai, No. 2006-108033 A (Publication Date: April 20, 2006)

### Summary of Invention

### Technical Problem

In general, such lightguides are manufactured with a minus tolerance, in consideration of damage caused between lightguides, slimming down of an illumination device, a manufacturing error, etc. Accordingly, a gap corresponding to the minus tolerance is caused between two adjacent lightguides.

Such a gap defined between two adjacent lightguides due to the concerns above in manufacturing is recognized by a viewer as a non-emissive area on a light-emitting surface made up of the light exit surfaces of the lightguides. For this reason, in a case where an illumination device having such combined lightguides is adopted as a backlight of a display apparatus, luminance unevenness is caused on the light-emitting surface. As a result, quality of a display image is deteriorated. In addition, a dark line is caused. This leads to a problem of a decrease in luminance efficiency of the backlight.

Despite this, Patent Literatures 1 to 3 do not focus attention at all on the deterioration of quality of a display image due to a gap defined between two adjacent lightguides, nor disclose any contrivance for the gap. Accordingly, the region corresponding to the gap does not emit light at all. As a result, the region is recognized by a viewer as a dark line.

The present invention was made in view of the problem. An object of the present invention is to provide an illumination device which is slim and has further improved uniformity of luminance on the light-emitting surface, even if a gap is defined between two adjacent lightguides.

Another object of the present invention is to provide a surface light source device which includes the illumination device so as to be slim and so as to have further improved uniformity of luminance on the light-emitting surface.

Still another object of the present invention is to provide a liquid crystal display apparatus which includes the surface light source device as a backlight so as to have a high display quality and so as to be slim.

### Solution to Problem

In order to attain the objects, an illumination device of the present invention includes: a plurality of combinations each made up of a light source and a lightguide for diffusing light from the light source so as to emit the light in a surface emitting manner from a light exit surface of the lightguide; first reflecting sheets each of which is provided so as to cover an opposite surface of a corresponding one of the lightguides, the opposite surface being opposite to the light exit surface; and second reflecting sheets each of which is provided, on an opposite surface side, over a corresponding one of first gaps, each of which first gaps is defined between adjacent two of the lightguides that do not to overlap each other, each of the second reflecting sheets covering at least a region where no first reflecting sheets is provided in the corresponding one of the first gaps, and being extended over the adjacent two of the lightguides.

### <First gap which is defined between any two adjacent lightguides that do not overlap each other>

As described above, in general, lightguides are manufactured with a minus tolerance, in consideration of damage caused between lightguides, slimming down of an illumination device, a manufacturing error, etc. Accordingly, a gap corresponding to the minus tolerance is defined between two adjacent lightguides. Such a gap is recognized by a viewer as a non-emissive area on a light-emitting surface made up of the light exit surfaces of the lightguides. For this reason, in a case where an illumination device having such combined lightguides is adopted as a backlight of a display apparatus, luminance unevenness is caused on the light-emitting surface. As a result, quality of a display image is deteriorated.

The gap which is defined between any two adjacent lightguides that do not overlap each other (hereinafter, the gap is referred to as first gap) refers to a gap which is defined between any two lightguides which are adjacent to each other on the same plane. For example, in an illumination device in which a plurality of lightguides are two-dimensionally arranged so as not to overlap each other (tile-type illumination device), the gap which is defined between any two adjacent lightguides indicates a gap which is defined, around the entire circumference of one lightguide (e.g., around four sides of a rectangle if a planar shape of the lightguide is a rectangle), between any two adjacent lightguides that do not overlap each other, i.e., indicates a first gap. In other words, any gap defined in the tile-type illumination device is classified into the type of the first gap.

On the other hand, another type of gap is defined in an illumination device (tandem-type illumination device) in which a light-emitting section of one of two adjacent lightguides overlaps a lightguide section of the other one of the two adjacent lightguides. Specifically, the first gap is defined between any two adjacent lightguides that do not overlap each other, and another gap (hereinafter, referred to as second gap) is defined between any two adjacent lightguides that overlap each other. Therefore, the arrangement of the present invention focuses on the first gap, which is defined in both a tile-type illumination device and a tandem-type illumination device.

### <First reflecting sheet>

According to the arrangement, each of the first reflecting sheets is provided so as to cover that opposite surface of a corresponding one of the lightguides which is opposite to the light exit surface of the corresponding one of the lightguides. Specifically, each of the first reflecting sheets reflects back, to a corresponding one of the lightguides, light which exits from the lightguide via the opposite surface. Thus, the first reflecting sheets increase a light utilization efficiency of each of the lightguides.

A common lightguide is arranged such that light from a light source is totally reflected on the inner surface of the lightguide repeatedly, so as to guide the light to the light exit surface. In a case where light enters the lightguide at an incident angle of not more than a total reflection critical angle, the light is not totally reflected but exits from the inner surface to the outside. Therefore, each of the first reflecting sheets is provided on that opposite surface (hereinafter, referred to as back surface of the lightguide) of a corresponding one of the lightguides which is opposite to the light exit surface. Thus, it is arranged such that each of the first reflecting sheets reflects back, to a corresponding lightguide, light which exits from the back surface to the outside.

### <Second reflecting sheet>

Each of the second reflecting sheets is provided on the back surface of a corresponding one of the lightguides so as to cover a corresponding one of the first gaps and so as to extend over the adjacent two of the lightguides. This makes it possible to prevent a dark area from arising by reason that no reflecting sheet is provided in the first gap.

Therefore, by providing the second reflecting sheets, it becomes possible to prevent luminance unevenness on the entire light-emitting surface.

### <Necessity of an arrangement such that two reflecting sheets are used in a pair>

In a case where only one reflecting sheet is provided so as to cover the first gaps, a possible arrangement is such that a long one reflecting sheet is employed to cover the first gaps. However, a large length of the reflecting sheet makes it difficult to perform positioning thereof and fixation thereof in a step of providing the reflecting sheet on a lightguide. This decreases workability. In addition, thermal shrinkage of the reflecting sheet causes a wrinkle thereof. This causes problems such that the reflecting sheet tends to be uplifted from the lightguide.

By contrast, in a case where short reflecting sheets are provided so as to each extend over lightguides in order that each of the short reflecting sheets covers a corresponding first gap, a small length of the short reflecting sheets causes a problem in that a region with no reflecting sheet arises between any two adjacent reflecting sheets.

Therefore, the present invention adopts an arrangement such that two reflecting sheets, i.e., a first reflecting sheet and a second reflecting sheet are used in a pair so as to dissolves the problem with the arrangement such that each reflecting sheet is solely used.

### <Shape etc. of reflecting sheets>

A large length of the first reflecting sheets or the second reflecting sheets causes the aforementioned problems. Therefore, in the present invention, the first reflecting sheets are provided to the lightguides, respectively, so as to cover the back surfaces thereof. On the other hand, the second reflecting sheets are provided so as to each extend over the two adjacent lightguides. Thus, the shape and size of the first reflecting sheets and those of the second reflecting sheets are affected by the shape and size of the lightguides.

In order to attain the object, an illumination device of the present invention includes: a plurality of combinations each made up of a light source and a lightguide for diffusing light from the light source so as to emit the light in a surface emitting manner from a light exit surface of the lightguide; first reflecting sheets each of which is provided so as to cover an opposite surface of a corresponding one of the lightguides, the opposite surface being opposite to the light exit surface; and second reflecting sheets each of which is provided, on an opposite surface side, over a corresponding one of first gaps, each of which first gaps is defined between adjacent two of the lightguides that do not to overlap each other, each of the second reflecting sheets covering at least a region where no first reflecting sheets is provided in the corresponding one of the first gaps.

According to the present invention, as long as a length of the second reflecting sheets does not cause the aforementioned problems, each of the second reflecting sheets is provided over a corresponding one of first gaps, each of which first gaps is defined between adjacent two of the lightguides that do not to overlap each other, each of which second reflecting sheets covers at least a region where no first reflecting sheets is provided in the corresponding one of the first gaps.

Therefore, each of the second reflecting sheets may be provided so as to partially cover a corresponding lightguide and so as to cover two or more of the first gaps.

According to the arrangement, each of the second reflecting sheets is provided, on the back surface of a corresponding one of the lightguide, over a corresponding one of first gaps, each of which second reflecting sheets covers at least a region where no first reflecting sheets is provided in the corresponding one of the first gaps. In addition, the first reflecting sheets are provided to the plurality of lightguides, respectively. This makes it possible to realize an illumination device which is slim and has further improved uniformity of luminance on the light-emitting surface, without adopting long first reflecting sheets.

In order to attain the object, an illumination device of the present invention includes: a plurality of combinations each made up of a light source and a lightguide for diffusing light from the light source so as to emit the light in a surface emitting manner from a light exit surface of the lightguide, any adjacent two of the lightguides not overlapping each other; first reflecting sheets each of which is provided so as to cover an opposite surface of a corresponding one of the lightguides, the opposite surface being a surface opposite to the light exit surface; and second reflecting sheets each of which is provided on an opposite surface side so as to cover a corresponding one of first gaps, the corresponding one of the first gaps, each of which first gaps is defined between adjacent two of the lightguides.

Since the arrangement is such that any two adjacent lightguides do not overlap each other, the illumination device is a tile-type illumination device which is described above. Therefore, any gap defined between two adjacent lightguides is a first gap which is defined between two adjacent lightguides that do not overlap each other.

Note that the expression "cover a first gap" means that a second reflecting sheet is provided in a first gap defined between an opposite surface of a lightguide and an opposite surface of an adjacent lightguide, or that the second reflecting sheet covers the first gap. The expression does not mean that a recess section of a first gap is filled with a second reflecting sheet.

According to the arrangement, as described above, each of the second reflecting sheets is provided, separately from the first reflecting sheets, on the opposite surface side of a corresponding one of the lightguides so as to cover a corresponding one of first gaps. Therefore, by providing the first reflecting sheets respectively to the plurality of lightguides, it becomes possible to realize an illumination device which is slim and has further improved uniformity of luminance on the light-emitting surface, without adopting a long first reflecting sheet.

An illumination device includes: a plurality of combinations each made up of a light source and a lightguide for diffusing light from the light source so as to emit the light in a surface emitting manner, each of the lightguides having: a light-emitting section having a light exit surface; and a lightguide section which guides, to the light-emitting section, light from a corresponding one of the light sources, and each of the lightguides overlapping each other in such a manner that a light-emitting section of one of adjacent two lightguides overlaps a lightguide section of the other one of the adjacent two lightguides; first reflecting sheets each of which is provided so as to cover an opposite surface of a corresponding one of the lightguides, the opposite surface being opposite to the light exit surface; and second reflecting sheets each of which is provided, on an opposite surface side, over at least a corresponding one of first gaps, each of which first gaps is defined between adjacent two of the lightguides that do not to overlap each other.

According to the arrangement, a light-emitting section of one of adjacent two lightguides overlaps a lightguide section of the other one of the adjacent two lightguides. Therefore, the illumination device is a tandem-type illumination device which is described above. Accordingly, the following deals with a first gap which is specific to tandem-type illumination devices.

According to the arrangement, as described above, each of the second reflecting sheets is provided so as to cover a corresponding one of the first gaps and so as to be positionally shifted from a corresponding first reflecting sheet. This makes it possible to prevent: a wrinkles of each of the first and second reflecting sheets due to thermal shrinkage thereof, and prevent each of the first and second reflecting sheets from being uplifted from a corresponding one of the lightguides. In addition, this makes it possible to realize an illumination device which is slim and has further improved uniformity of luminance on the light-emitting surface.

The illumination device is preferably arranged such that the first reflecting sheets and the second reflecting sheets associated therewith overlap each other at least partially and correspondingly.

The expression "the first reflecting sheets and the second reflecting sheets associated therewith overlap each other at least partially and correspondingly" means that a first reflecting sheet and a corresponding second reflecting sheet are partially stacked in two layers.

By adopting at least partially such a stacked structure of a first reflecting sheet and a corresponding second reflecting sheet, a reflectance is increased at which reflectance light which exits from the back surface of a corresponding lightguide is reflected. This makes it possible to increase a luminance efficiency.

An area of the stacked structure is increased by, e.g., increasing an area of the second reflecting sheet which is provided on the first reflecting sheet provided on the back surface of the lightguide. This allows the second reflecting sheet to reflect light which is not reflected by the first reflecting sheet and therefore exits from the lightguide. Accordingly, the reflectance is increased. As a result, luminance efficiency is further improved.

Further, in the tandem-type illumination device, a light-emitting section of one of adjacent two lightguides overlaps a lightguide section of the other one of the adjacent two lightguides. This allows the first and second reflecting sheets provided on the back surface of the one lightguide to guide light from the light sources provided to the adjacent two lightguides, without affecting a light emission amount of the two adjacent lightguides. This makes it possible to realize an illumination device which has no luminance unevenness on the light-emitting surface, i.e., excels in uniformity of luminance.

Thus, by adopting the stacked structure, it becomes possible to increase a shielding ratio of the first reflecting sheet. This makes it possible to properly perform black display, and prevent display unevenness.

The tandem-type illumination device is preferably arranged such that each of the lightguides overlaps each other in such a manner that a light-emitting section of one of adjacent two lightguides is in contact with a lightguide section of the other one of the adjacent two lightguides via a contact surface; and each of the second reflecting sheets covers at least a part of the contact surface.

In the tandem-type illumination device, the lightguide section of the one lightguide is located so as to have contact with the under side of the light-emitting section of the other lightguide. According to the arrangement, the second reflecting sheets are provided so that each of the second reflecting sheets not only covers a corresponding one of the first gaps but also covers at least a part of a contact surface between the two adjacent lightguides which overlap each other. That is, each of the second reflecting sheets is provided on the back surface of a corresponding lightguide so as to cover at least a part of an area where the upper surface (surface on the light exit surface side) of the lightguide section of the one lightguide and the lower surface (surface opposite to the light exit surface) of the light-emitting section of the other lightguide overlap each other.

This results in a structure such that the second reflecting sheets stacked partially on the first reflecting sheet provided on the opposite surface of the other lightguide. As described above, this makes it possible to obtain (i) an effect of increasing a reflectance of the first reflecting sheet provided on the other lightguide and (ii) an effect of increasing a shielding ratio at which the first reflecting sheet shields light emitted from the light source of the one lightguide.

The illumination device is preferably arranged such that each of the lightguides overlaps each other in such a manner that a light-emitting section of one of adjacent two lightguides is in contact with a lightguide section of the other one of the adjacent two lightguides via a/the contact surface; and each of the second reflecting sheets covers at least a part of the contact surface, the part being above a corresponding light source which is provided for the lightguide section corresponding to the contact surface.

Accordingly, each of the second reflecting sheet is provided in a position where light emitted from the light source of the one lightguide is shielded most easily. This makes it possible to easily obtain an effect of shielding the light by the first reflecting sheet provided on the other lightguide.

In a tandem-type illumination device, each of the second reflecting sheets is preferably a both-side reflecting sheet.

In a tandem-type illumination device, a light-emitting section of one of adjacent two lightguides overlaps a lightguide section of the other one of the adjacent two lightguides. Accordingly, the light source of the one lightguide is located under the other lightguide, and a corresponding second reflecting sheet is sandwiched between the lightguide section of the one lightguide and the light-emitting section of the other lightguide.

According to the arrangement, the second reflecting sheet reflects, back to the one lightguide, at least a part of light which exits from the upper surface (surface on the light exit surface side) of the one lightguide to the back surface of the other lightguide. This makes it possible to increase a light utilization efficiency of each of the lightguides.

A common lightguide is arranged such that light from a light source is totally reflected on the inner surface of the lightguide repeatedly, so as to guide the light to the light exit surface. Light which is incident on the upper surface of the one lightguide at an incident angle of not more than a total reflection critical angle which is determined by a material for the lightguides is not totally reflected but exits from the one lightguide to the outside (i.e., toward the other lightguide). In view of this, each of the second reflecting sheets is provided so as to reflect back, to a corresponding lightguide, at least a part of light which exits from the upper surface of the lightguide.

The arrangement allows the second reflecting sheet of the other lightguide to return light to the one lightguide. This makes it possible to increase a light utilization efficiency.

The effect of returning light to the one lightguide by the second reflecting sheet can be obtained, provided that each of the second reflecting sheets covers a corresponding first gap. The effect is increased in a case where each of the second reflecting sheets is provided so as to stack on a corresponding first reflecting sheet, because an area of each of the second reflecting sheets is larger. Therefore, the effect is further increased in a case where each of the second reflecting sheets is provided so as to cover at least a part of the contact surface between the lightguide section of the one lightguide and the light-emitting section of the other lightguide. Furthermore, the effect is further increased in a case where each of the second reflecting sheets is provided so as to cover at least the part of the contact surface above the light source provided to the lightguide section of the one lightguide.

The tandem-type illumination device is preferably arranged such that each of the second reflecting sheets is extended to a corresponding one of second gaps each of which is defined between adjacent two of the lightguides overlapping each other.

### <Second gap which is defined between any two adjacent lightguides that overlap each other>

As described above, in general, lightguides are manufactured with a minus tolerance, in consideration of damage caused between lightguides, slimming down of an illumination device, a manufacturing error, etc. Accordingly, a gap corresponding to the minus tolerance is defined between two lightguides. Such a gap is recognized by a viewer as a non-emissive area on a light-emitting surface made up of the light exit surfaces of the lightguides. For this reason, in a case where an illumination device having such combined lightguides is adopted as a backlight of a display apparatus, luminance unevenness is caused on the light-emitting surface. As a result, quality of a display image is deteriorated.

The second gap which is defined between any two adjacent lightguides that overlap each other refers to a gap defined between respective light exit surfaces of two adjacent lightguides in a case where, e.g., each of the lightguides has: a light-emitting section having a light exit surface; and a lightguide section for guiding light from a corresponding light source to the light-emitting section, and a light-emitting section of one of two adjacent lightguides overlaps a lightguide section of the other one of the two adjacent lightguides.

As is the case with the first gap, the second gap which is defined between any two adjacent lightguides that overlap each other also causes a dark area due to lack of a reflecting sheet.

According to the arrangement, each of the second reflecting sheets is extended to a corresponding one of second gaps. Accordingly, each of the second reflecting sheets covers a part of or the whole of the corresponding one of the second gaps. This makes it possible to prevent the second gaps from becoming areas darker than the light-emitting surfaces of the light-emitting sections due to the lack of a reflecting sheet. Therefore, by providing the first reflecting sheets respectively to the plurality of lightguides without adopting a long first reflecting sheet, it becomes possible to realize an illumination device which is slim and has further improved uniformity of luminance on the light-emitting surface.

The illumination device of the present invention is preferably arranged such that: the lightguides are arranged in such a manner that they do not overlap with their neighbors adjacent thereto in a direction; at least two of the second reflecting sheets are arranged in the direction; and the at least two of the second reflecting sheets are provided so as to have no gap therebetween.

According to the arrangement, each of the second reflecting sheets is provided so that each of the second reflecting sheets not only covers a corresponding one of the first gaps which is defined between two adjacent lightguides that do not overlap each other but also overlaps corresponding first reflecting sheets provided on the back surfaces of the two adjacent lightguides, without leaving any gap between adjacent two second reflecting sheets.

To provide the second reflecting sheets without leaving any gap therebetween means both (i) to provide any two adjacent second reflecting sheets on a corresponding first reflecting sheet so that they are immediately adjacent to each other in the direction in which the lightguides are arranged in such a manner that they do not overlap each other, and (ii) to provide any adjacent second reflecting sheets so that they overlap each other and no gap is defined in the overlapping region.

That is, in a case where a gap is defined between two second reflecting sheets which are adjacent to each other on a corresponding first reflecting sheet in the direction in which the lightguides are arranged in such a manner that they do not overlap each other, only the first reflecting sheets covers the gap. In this case, a reflectance is lower as compared to the arrangement such that a first reflecting sheet and a corresponding second reflecting sheet are stacked. This can cause luminance unevenness.

In view of this, the arrangement of the present invention makes it possible to eliminate the cause of luminance unevenness.

Accordingly, the back surface of each of the lightguides does not have a region where no second reflecting sheet is provided but a first reflecting sheet is provided. Therefore, the reflection function of the first reflecting sheets is sufficiently complemented by the second reflecting sheets. This uniformly increases a reflectance of each of the first reflecting sheets. As a result, a light utilization efficiency can be increased.

In a case where the arrangement is applied to a tandem-type illumination device, the second reflecting sheets can sufficiently complement a shielding function of shielding, by the first reflecting sheets, light which exits from the one lightguide to the other lightguide. This makes it possible to perform proper display in which light leakage, luminance unevenness due to light leakage, etc. are not caused.

The illumination device of the present invention is preferably arranged such that each of the first reflecting sheets is bonded to a corresponding one of the lightguides via a first bonding section.

In a case where a gap is defined between a first reflecting sheet and the back surface of a corresponding lightguide, a loss of light is larger than in a case where no such gap is defined. This decreases a luminance efficiency. Therefore, by closely bonding the first reflecting sheet and the back surface of the lightguide to each other via the first bonding section, it becomes possible to increase a luminance efficiency.

In order to increase a luminance efficiency by closely bonding the first reflecting sheet and the back surface of the lightguide each other, it may be arranged such that each of the first reflecting sheets is bonded to a corresponding one of the lightguides via the first bonding section at an edge portion of the opposite surface of the corresponding one of the lightguides.

The illumination device is preferably arranged such that each of the first reflecting sheets is bonded to a corresponding one of the second reflecting sheets via a second bonding section.

In a case where a first reflecting sheet and a corresponding second reflecting sheet are stacked at least partially, and a gap is defined therebetween, a loss of light is larger than in a case where no such gap is defined. This decreases a luminance efficiency. For this reason, each of the first reflecting sheets and a corresponding second reflecting sheet are bonded to each other via the second bonding section. This increases a luminance efficiency.

The illumination device is preferably arranged such that each of the second reflecting sheets is bonded, via a third bonding section, to a substrate to which the lightguides is mounted.

In a case where a second reflecting sheet provided on the back surface of a corresponding lightguide is uplifted from the substrate on which the lightguides are mounted, a loss of light is caused in the uplifted region. For this reason, each of the second reflecting sheets and the substrate are bonded to each other via the third bonding section. This increases a luminance efficiency.

A surface light source device of the present invention includes: any one of the illumination devices; and an optical member being provided on or above a light-emitting surface of the illumination device.

The optical member is, e.g., a diffusing plate having a thickness from approximately 2 to 3 mm which diffusing plate is located several millimeters away from the illumination device. However, the thickness of the optical member and the distance between the optical member and the illumination device are not limited to this.

Further, it may be arranged such that e.g., a multifunctional optical sheet such as a diffusing sheet, a prism sheet, and a polarized light reflecting sheet each of which has a thickness of approximately several hundred micrometers is stacked on the upper surface of the diffusing plate so that luminance uniformity can be obtained to the extent that the surface light source device fulfills its function. The thickness and the arrangement are merely examples, and therefore, not limited to this.

This makes it possible to realize a surface light source device which is slim and has a further improved uniformity of luminance on the light-emitting surface, even if a gap is defined on the light-emitting surface of the illumination device.

A liquid crystal display apparatus of the present invention includes, as a backlight, the surface light source device.

According to the arrangement, the liquid crystal display apparatus includes the surface light source device which is slim and excels in uniformity of luminance on the light-emitting surface. This makes it possible to realize a slim liquid crystal display apparatus with a high display quality.

The illumination device is preferably arranged such that: on the opposite surface side, the first reflecting sheets and the second reflecting sheets associated therewith overlap each other correspondingly at a position corresponding to a relatively dark area of the light exit surface of the corresponding one of the lightguides.

According to the arrangement, at least each of the first reflecting sheets and a corresponding second reflecting sheet overlap each other at a position corresponding to a relatively dark area of the light exit surface of a corresponding lightguide in which dark area light is unlikely to reach due to directionality of a corresponding light source. This makes it possible to further increase uniformity of luminance on the light exit surface of the lightguide.

### Advantageous Effects of Invention

As described above, the illumination device of the present invention includes first reflecting sheets each of which is provided so as to cover an opposite surface of a corresponding one of the lightguides, the opposite surface being opposite to the light exit surface; and second reflecting sheets each of which is provided, on an opposite surface side, over a corresponding one of first gaps, each of which first gaps is defined between adjacent two of the lightguides that do not to overlap each other, each of the second reflecting sheets covering at least a region where no first reflecting sheets is provided in the corresponding one of the first gaps, and being extended over the adjacent two of the lightguides.

Further, as described above, the illumination device of the present invention includes: first reflecting sheets each of which is provided so as to cover an opposite surface of a corresponding one of the lightguides, the opposite surface being opposite to the light exit surface; and second reflecting sheets each of which is provided, on an opposite surface side, over a corresponding one of first gaps, each of which first gaps is defined between adjacent two of the lightguides that do not to overlap each other, each of the second reflecting sheets covering at least a region where no first reflecting sheets is provided in the corresponding one of the first gaps.

Further, as described above, the surface light source device of the present invention includes: any one of the illumination devices; and an optical member being provided on or above a light-emitting surface of the illumination device.

Further, as described above, the liquid crystal display apparatus of the present invention includes, as a backlight, the surface light source device.

This makes it possible to provide an illumination device which is slim and has further improved uniformity of luminance on the light-emitting surface, even if a gap is defined between two lightguides.

Further, by providing the illumination device to the surface light source device in which illumination device a long first reflecting sheet is not adopted but the first reflecting sheets are provided respectively to the plurality of lightguides, it becomes possible to realize a surface light source device which is slim and has further improved uniformity of luminance on the light-emitting surface, even if a gap is defined on the light-emitting surface of the illumination device.

Further, by providing, as a backlight, the surface light source device to the liquid crystal display apparatus, it becomes possible to realize a slim liquid crystal display apparatus with a high display quality.

### Brief Description of Drawings

Fig. 1

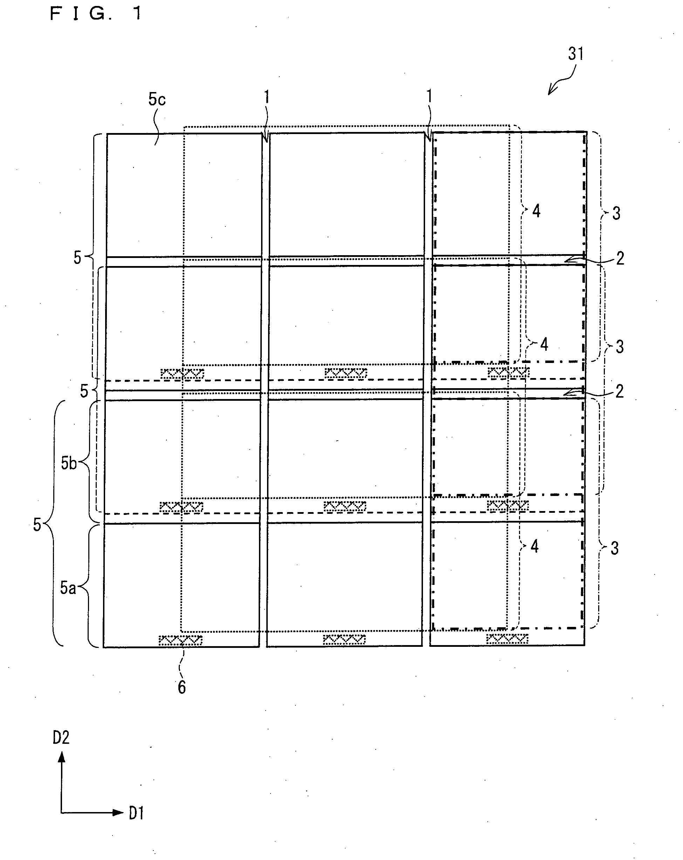

   Fig. 1 is an elevation view illustrating, from a light exit surface side, an illumination device provided in a liquid crystal display apparatus of one embodiment of the present invention.
Fig. 2

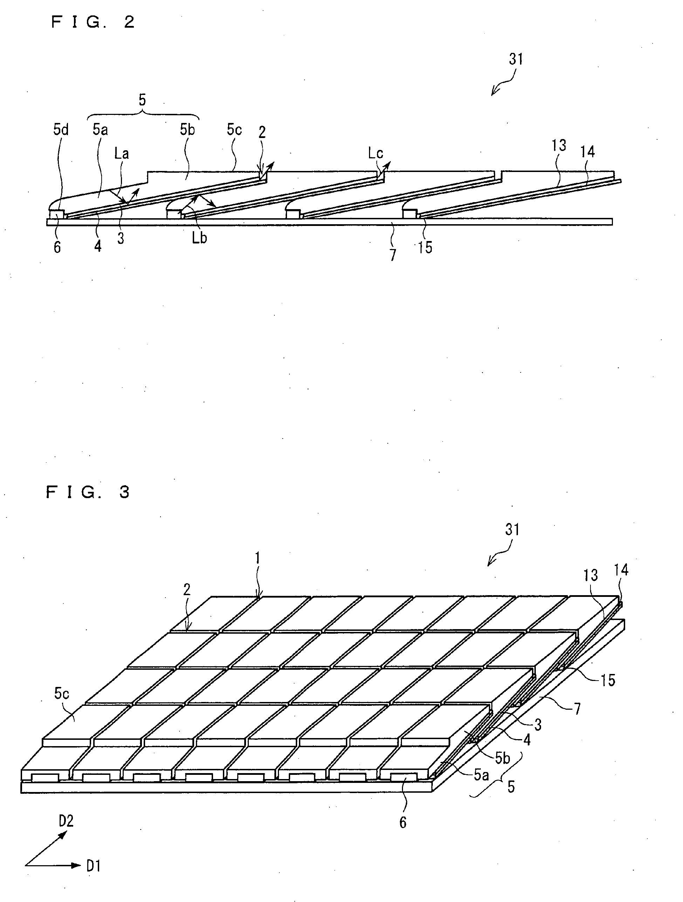

   Fig. 2 is a side view illustrating the illumination device provided in the liquid crystal display apparatus of the one embodiment of the present invention.
Fig. 3
   Fig. 3 is a perspective view illustrating the illumination device provided in the liquid crystal display apparatus of the one embodiment of the present invention.
Fig. 4

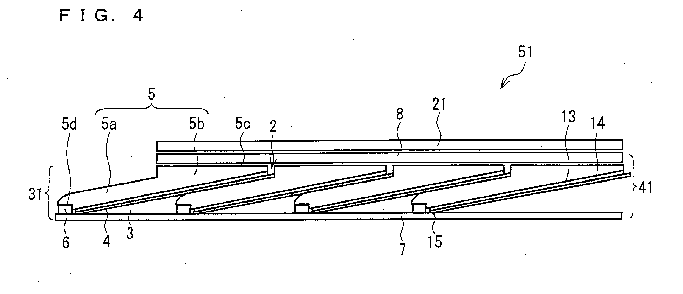

   Fig. 4 is a side view illustrating an arrangement of the liquid crystal display apparatus of the one embodiment of the present invention.
Fig. 5

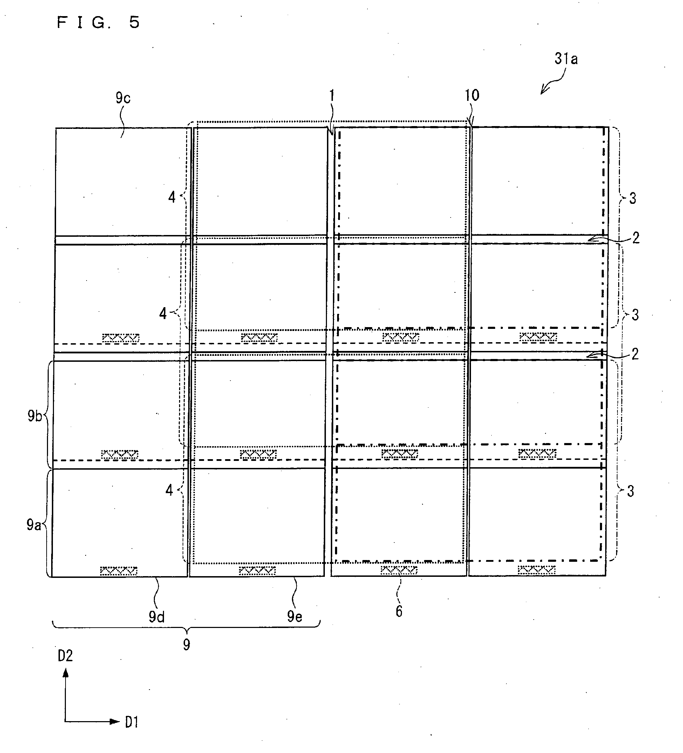

   Fig. 5 is an elevation view illustrating, from a light exit surface side, an illumination device provided in a liquid crystal display apparatus of another embodiment of the present invention.
Fig. 6

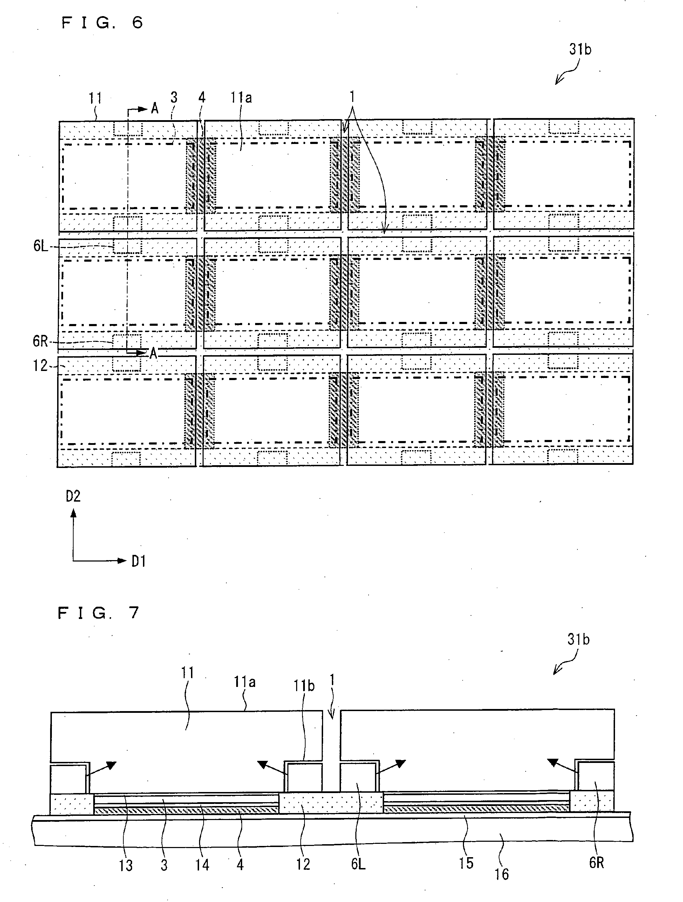

   Fig. 6 is an elevation view illustrating, from a light exit surface side, an illumination device provided in a liquid crystal display apparatus of still another embodiment of the present invention.
Fig. 7
   Fig. 7 is a fragmentary cross-sectional view of the illumination device illustrated in Fig. 6 which fragmentary cross-sectional view is taken along the AA line in Fig. 6.
Fig. 8 Each of (a), (b), and (c) of Fig. 8 is a view illustrating a schematic arrangement of a conventional surface light source device.

### Description of Embodiments

The following exemplifies embodiments of the present invention in detail, with reference to drawings. Note that dimensions, materials, shapes, relative configuration, etc. of constituent components in the embodiments are not for limiting the scope of the present invention only thereto but are merely explanatory examples, provided that there is no limitative description in particular. The following describes the embodiments of the present invention, with reference to Figs. 1 to 7.

### [Embodiment 1]

Fig. 4 is a side view illustrating a schematic arrangement of a liquid crystal display apparatus 51 of one embodiment of the present invention.

Specifically, Fig. 4 illustrates an arrangement of the liquid crystal display apparatus 51 which includes a surface light source device 41 as a backlight. The surface light source device 41 is constituted by an illumination device 31 which has a plurality of combinations each made up of a light source 6 and a lightguide 5 for emitting, in a surface-emitting manner, light from the light source 6. A light-emitting section 5b of one lightguide 5 overlaps a lightguide section 5a of an adjacent lightguide 5.

As illustrated in Fig. 4, the liquid crystal display apparatus 51 further includes a liquid crystal display panel 21. The surface light source device 41 (backlight) is provided behind the liquid crystal display panel 21 so as to irradiate the liquid crystal display panel 21 with light.

Each of the lightguides 5 is for emitting, via an light exit surface 5c, light emitted from the light source 6, in a surface-emitting manner. As illustrated in Fig. 4, the light exit surface 5c faces an optical element (optical member) 8 which is an irradiation target. The light exit surface 5c is a surface for irradiating the optical element 8 with light. The optical element 8 can be omitted so that the light exit surface 5c directly faces the liquid crystal display panel 21.

The following describes an arrangement of the illumination device 31 in detail, with reference to Figs. 1 to 3.

Fig. 1 is an elevation view illustrating, from an light exit surface 5c side, the illumination device 31 provided in the liquid crystal display apparatus 51 of the one embodiment of the present invention. Fig. 2 is a side view illustrating the illumination device 31. Fig. 3 is a perspective view illustrating the illumination device 31.

As illustrated in Fig. 2, the illumination device 31 includes a plurality of lightguides 5 each of which has: a light-emitting section 5b having an light exit surface 5c; and a lightguide section 5a for guiding light from the light source 6 to the light-emitting section 5b. The plurality of lightguides 5 are provided so that a light-emitting section 5b of one lightguide 5 overlaps a lightguide section 5a of an adjacent lightguide 5. The illumination device 31 further includes first reflecting sheets 3 and second reflecting sheets 4 (which are described later in detail), the light sources 6, and a substrate 7 for mounting the light sources 6 thereon. The arrangement allows the illumination device 31 to diffuse the light emitted from the light sources 6 so as to emit the light in a surface-emitting manner.

### < Lightguide >

As described above, in general, lightguides are manufactured with a minus tolerance, in consideration of damage caused between lightguides, slimming down of an illumination device, a manufacturing error, etc. Accordingly, a gap corresponding to the minus tolerance is defined between two lightguides. Such a gap is recognized by a viewer as a non-emissive area on a light-emitting surface made up of the light exit surfaces of the lightguides. For this reason, in a case where an illumination device having such combined lightguides is adopted as a backlight of a display apparatus, luminance unevenness is caused on the light-emitting surface. As a result, quality of a display image is deteriorated.

In the case of the illumination device 31 provided in the liquid crystal display apparatus 51 of the one embodiment of the present invention, the gap can be classified into the following two types as described below in detail, depending on its generating mechanism: (i) a gap which is defined between any two adjacent lightguides that do not overlap each other (first gap) and (ii) a gap which is defined between any two adjacent lightguides that overlap each other (second gap).

As illustrated in Figs. 1 and 3, referred to as direction D2 is a direction in which a light-emitting section 5b of a lightguide 5 overlaps a lightguide section 5a of an adjacent lightguide 5. Any two adjacent lightguides 5 overlap each other in the direction D2. Referred to as direction D1 is a direction intersecting with (substantially perpendicular to) the direction D2. Any two adjacent lightguides 5 do not overlap each other in the direction D1.

### <Gap which is defined between any two adjacent lightguides that do not overlap each other>

As illustrated in Figs. 1 and 3, the first gap 1 which is defined between any two adjacent lightguides 5 that do not overlap each other refers to a gap which is defined between any two lightguides 5 which are adjacent to each other in the direction D1. In other words, any two lightguides 5 which are adjacent to each other in the direction D1 have no overlapping area therebetween. This makes it possible to provide second reflecting sheets 4 (to be described later) so that each of the second reflecting sheets 4 is extended over corresponding two adjacent lightguides 5 so as to cover a corresponding first gap 1.

### < Gap which is defined between any two adjacent lightguides that overlap each other >

As illustrated in Figs. 1 and 3, on the other hand, the second gap 2 which is defined between any two adjacent lightguides 5 that overlap each other refers to a gap which is defined between light exit surfaces 5c of any two adjacent lightguides 5 in a case where a light-emitting section 5b of one of the lightguides 5 overlaps a lightguide section 5a of the other one of the lightguides 5. In other words, the second gap 2 refers to a gap which is defined between any two lightguides 5 which are adjacent to each other in the direction D2. In order that the non-emissive area caused by the second gap 2 is reduced, each of the second reflecting sheets 4 is provided so as to be extended in the direction in which two adjacent lightguides 5 overlap each other (i.e., in the D2 direction), as is illustrated in Figs. 1 and 2.

Also in a case where the second reflecting sheet 4 is extended in the direction D2 so as to cover a part of the second gap 2, it is still possible to obtain an effect of reducing the non-emissive area which is caused by the second gap 2 and displayed as a dark line. However, in order to increase the effect, it is preferable to extend the second reflecting sheet 4 in the direction D2 longer so as to entirely cover the second gap 2.

Thus, the illumination device 31 provided in the liquid crystal display apparatus 51 of the one embodiment of the present invention is a tandem-type illumination device in which a light-emitting section 5b of a lightguide 5 overlaps a lightguide section 5a of an adjacent lightguide 5. In the tandem-type illumination device, the first gap 1 is defined between any two adjacent lightguides 5 that do not overlap each other, and the second gap 2 is defined between any two adjacent lightguides 5 that overlap each other.

Each of the lightguides 5 is required to suppress a loss of light in the lightguide section 5a so as to efficiently emit, via the light exit surface 5c, light supplied via the incident surface 5d which faces the light source 6.

For this reason, the upper surface and the lower surface of each of the lightguide sections 5a are formed so as to be substantially parallel with each other. As a result, incident light is guided in the lightguide section 5a while a condition for total reflection are satisfied. Thus, each of the lightguides 5 can maintain a light amount. Satisfaction of the condition for total reflection refers to a state such that an incident angle (equal to reflection angle) of light to be reflected on an internal surface of a lightguide 5 exceeds a total reflection critical angle which is determined by a material for the lightguides 5. In a case where the incident angle falls below the total reflection critical angle, incident light is not totally reflected but exits from the inner surface of the lightguide 5 to the outside.

As illustrated in Fig. 4, the light exit surfaces 5c are provided so as to be substantially parallel with the optical element 8. This makes it possible to adopt a constant distance between the light exit surfaces 5c and the optical element 8 in a case where the surface light source device 41 which performs uniform surface emission is designed so that the illumination device 31 of the present invention is combined with the optical element 8. This allows easier optical design for uniformalizing surface emission.

Further, any two adjacent lightguides 5 overlap each other so as to incline with respect to the optical element 8 which is an irradiation target surface. Therefore, the light exit surface 5c of each of the lightguides 5 is not parallel with its opposite surface. As a result, each of the lightguides 5 has a cross-sectional shape which becomes thinner with distance from the light source 6.

According to the arrangement, in each of the lightguides 5, the condition for total reflection gradually becomes less satisfied with distance from the light source 6. Thus, light guided in each of the lightguides 5 is emitted via the light exit surface 5c.

The lightguides 5 are made from a transparent resin such as polycarbonate (PC) and polymethylmethacrylate (PMMA). However, a material for the lightguides 5 is not limited to them, but may be one which is commonly adopted as a material for a lightguide. The lightguides 5 can be formed by methods such as injection molding, extrusion molding, heat-press molding, and cutting. However, a method for forming the lightguides 5 is not limited to them, but may be any method provided that the lightguides 5 can have the similar characteristic.

### <First reflecting sheet>

As illustrated in Figs. 1 to 3, each of the first reflecting sheets 3 is provided so as to cover that opposite surface of a corresponding one of the lightguides 5 which is opposite to the light exit surface 5c. Fig. 1 illustrates some of the first reflecting sheets 3 only, for simplicity of the figure.

Each of the first reflecting sheets 3 reflects back, to a corresponding one of the lightguides 5, light which exits from the lightguide 5 via the opposite surface. Thus, the first reflecting sheets 3 increase a light utilization efficiency of each of the lightguides 5. More specifically, as illustrated in Fig. 2, each of the first reflecting sheets 3 reflects light La back to a corresponding one of the lightguides 5 which light La enters the lightguide 5 at an incident angle of not more than a total reflection critical angle which is determined by a material for the lightguides 5, with respect to a normal to the opposite surface of the lightguide 5, and then exits from the lightguide 5 due to such incidence.

### <Second reflecting sheet>

Each of the second reflecting sheets 4 is provided, on that one surface of a corresponding one of the first reflecting sheets 3 which is opposite to the other surface thereof on the lightguide 5 side, so as to cover the first gaps 1 each of which is defined between two adjacent lightguides 5 that do not overlap each other, and so as to be extended over at least two adjacent lightguides 5. Further, as illustrated in Fig. 1, each of the second reflecting sheets 4 is provided so as to be positionally shifted in the direction D1 from a corresponding one of the first reflecting sheets 3.

As is the case with the first reflecting sheets 3, Fig. 1 illustrates some of the second reflecting sheets 4 only, for simplicity of the figure. However, actually, the plurality of second reflecting sheets 4 are continuously provided in the direction D1, in other words, provided so as to be immediately adjacent to each other, without defining a gap between any two second reflecting sheets 4 which are adjacent to each other in the direction D1. Alternatively, the plurality of second reflecting sheets 4 may be provided so that any two adjacent ones thereof overlap each other, in order that a gap is not defined therebetween.

A width of each of the second reflecting sheets 4 along the direction D1 is not particularly limited, provided that each of the second reflecting sheets 4 can cover at least one first gap 1. For example, the width may be shorter than a width of each of the lightguides 5 along the direction D1. In this case, any two second reflecting sheets 4 which are adjacent in the direction D1 come away from each other. This causes an area therebetween in which only a first reflecting sheet 3 resides and the first reflecting sheet 3 does not overlap any second reflecting sheet 4.

As a result, in such an area, no second reflecting sheet 4 can complement a reflecting function and a shielding function (to be described later) of the first reflecting sheets 3. For this reason, it is preferable that no such an area be caused, for an improved performance of the illumination device 31. In order that such an area is not caused, a width of each of the second reflecting sheets 4 along the direction D1 takes at least a value obtained by adding a width of each of the gaps 1 along the direction D1 to a width of each of the lightguides 5 along the direction D1. A width thus obtained is a minimum width such that any two second reflecting sheets 4 which are adjacent in the direction D1 are provided so as to be immediately adjacent to each other in the direction D1, without having a gap therebetween.

Alternatively, a width of each of the second reflecting sheets 4 along the direction D1 may take a value obtained by adding double the width of each of the gaps 1 along the direction D1 to double the width of each of the lightguides 5 along the direction D1, in order that each of the second reflecting sheets 4 can cover two first gaps 1, as illustrated in Fig. 1.

In Fig. 1, any two second reflecting sheets 4 which are adjacent in the direction D2 overlap each other because any two adjacent lightguides 5 are provided so as to overlap each other.

A shape of each of the second reflecting sheets 4 or how each of the second reflecting sheets 4 is provided is not limited to this. For example, each of the second reflecting sheets 4 may be provided so as to partially cover a corresponding lightguide 5 and so as to cover three or more first gaps 1.

Therefore, as described later in detail, a size and a shape of each of the second reflecting sheets 4 can be freely determined, provided that a too large length thereof does not cause a problem.

According to the present embodiment, as illustrated in Fig. 1, each of the second reflecting sheets 4 is provided so as to cover the first gaps 1 and so as to be extended over at least two adjacent lightguides 5. This makes it possible to prevent a dark area from arising by reason that no reflecting sheet is provided in the first gaps 1.

Further, as illustrated in Fig. 2, each of the second reflecting sheets 4 is provided so as to cover even a corresponding second gap 2. This allows reflected light Lc to exit from each of the second gaps 2. This makes it possible to prevent a dark area from arising by reason that no reflecting sheet is provided in the second gaps 2. As a result, it becomes possible to realize the illumination device 31, which is slim and has a further improved uniformity of luminance on the light-emitting surface.

Further, the first reflecting sheets and the second reflecting sheets associated therewith preferably overlap each other at least partially and correspondingly.

The arrangement is such that a first reflecting sheet 3 and a second reflecting sheet 4 are partially stacked in two layers. By adopting such a stacked structure at least partially, the second reflecting sheet 4 complements the reflecting function of the first reflecting sheet 3 to reflect, back to a corresponding lightguide 5, light which exits from the back surface of the lightguide 5. This increases a reflectance of the first reflecting sheets 3. As a result, it becomes possible to increase a luminance efficiency of the lightguides 5.

The larger area a second reflecting sheet 4 has which is provided on the first reflecting sheet 3 provided on the back surface of a corresponding lightguide 5, the larger area the stacked structure has. This increases a reflectance of the first reflecting sheets 3. As a result, it becomes possible to further increase the luminance efficiency of the lightguides 5.

In a tandem-type illumination device in particular, as illustrated in Fig. 4, a light source 6 of one lightguide 5 is located under the other lightguide 5. Therefore, if light from the light source 6 of the one lightguide 5 passes through the first reflecting sheet 3 provided on the other lightguide 5 in a case where the light-emitting surface of the other lightguide 5 is darkened in, e.g., local dimming in which the light sources 6 are independently controlled so that a luminance on the light-emitting surface of the illumination device 31 is controlled in part, black display cannot be sufficiently performed on the light-emitting surface of the other lightguide 5 and/or a display unevenness is caused on the light-emitting surface on which the black display should be performed.

As a solution to the problem, a first reflecting sheet 3 and a second reflecting sheet 4 are stacked. This increases a shielding ratio of the first reflecting sheets 3. As a result, it becomes possible to properly perform black display and remedy the display unevenness.

In the illumination device 31 provided in the liquid crystal display apparatus 51 of the one embodiment of the present invention, it is preferable that each of the lightguides 5 overlaps each other in such a manner that a light-emitting section 5b of one of adjacent two lightguides 5 is in contact with a lightguide section 5a of the other one of the adjacent two lightguides 5 via a contact surface; and each of the second reflecting sheets 4 covers at least a part of the contact surface. It is more preferable that each of the second reflecting sheets 4 entirely cover the contact surface.

In the tandem-type illumination device, as illustrated in Fig. 4, the lightguide section 5a of the one lightguide 5 is located so as to have contact with the under side of the light-emitting section 5b of the other lightguide 5. Each of the second reflecting sheets 4 is provided on the back surface of a corresponding lightguide 5 so that each of the second reflecting sheets 4 not only covers first gaps 1 but also covers at least a part of an area where the upper surface (surface on the light exit surface side) of the lightguide section 5a of the one lightguide 5 and the lower surface (surface opposite to the light exit surface 5c) of the lightguide section 5b of the other lightguide 5 overlap each other.

This results in a structure such that the second reflecting sheet 4 is stacked partially on the first reflecting sheet 3 provided on the back surface of the other lightguide 5. As described above, this makes it possible to obtain (i) an effect of increasing a reflectance of the first reflecting sheet 3 provided on the other lightguide 5 and (ii) an effect of increasing a shielding ratio at which the first reflecting sheet 3 shields light emitted from the light source 6 of the one lightguide 5.

In a case where the second reflecting sheet 4 is provided so as to cover at least a part of the contact surface, it is particularly preferable that the second reflecting sheet 4 be provided so as to cover the part above the light source 6 provided for the lightguide section 5a of the one lightguide 5. Accordingly, the second reflecting sheet 4 is provided in a position where light emitted from the light source 6 of the one lightguide 5 is shielded most easily. This makes it possible to easily obtain an effect of shielding the light by the first reflecting sheet 3 provided on the other lightguide 5.

Further, each of the second reflecting sheets 4 is preferably a both-side reflecting sheet.

Accordingly, as illustrated in Fig. 2, each of the second reflecting sheets 4 reflects, back to a corresponding lightguide 5, light Lb which exits from the upper surface (surface on the light exit surface 5c side) of the lightguide section 5a of the lightguide 5. Thus, the second reflecting sheets 4 can increase a light utilization efficiency of each of the lightguides 5. Each of the second reflecting sheets 4 is arranged so as to reflect back, to a corresponding lightguide 5, the light Lb which exits from the lightguide 5 by the reason that the condition for total reflection becomes unsatisfied on the upper surface of the lightguide section 5a of the lightguide 5.

The arrangement allows the second reflecting sheet 4 of the other lightguide 5 to return the light to the one lightguide 5. This makes it possible to increase a light utilization efficiency.

Further, the second reflecting sheet 4 and the first reflecting sheet 3 of the other lightguide 5 shield the light which exits from the one lightguide 5 so as to prevent the light from exiting from the light exit surface 5c of the other lightguide 5.

In a case where only one reflecting sheet is provided so as to cover the first gaps 1, a possible arrangement is such that a long one reflecting sheet is employed to cover the first gaps 1. However, a large length of the reflecting sheet makes it difficult to perform positioning thereof and fixation thereof in a step of providing the reflecting sheet on a lightguide. This decreases workability. In addition, thermal shrinkage of the reflecting sheet causes a wrinkle thereof. This causes problems such that the reflecting sheet tends to be uplifted from the lightguide.

By contrast, in a case where short reflecting sheets are provided so as to each extend over lightguides 5 in order that each of the short reflecting sheets covers a corresponding first gap 1, a small length of the short reflecting sheets causes a problem in that a region with no reflecting sheet arises between any two adjacent reflecting sheets.

Therefore, the illumination device 31 provided in the liquid crystal display apparatus 51 of the one embodiment of the present invention includes the first reflecting sheets 3 and the second reflecting sheets 4. Thus, the illumination device 31 adopts an arrangement such that two reflecting sheets are used in a pair, so as to dissolves the problem with the arrangement such that each reflecting sheet is solely used.

Further, a large length of the first reflecting sheets 3 or the second reflecting sheets 4 causes the aforementioned problems. Therefore, the first reflecting sheets 3 are provided to the lightguides 5, respectively, so as to cover the back surfaces thereof. On the other hand, the second reflecting sheets 4 are provided so as to each extend over two adjacent lightguides 5. Thus, the shape of the first reflecting sheets 3 and the shape of the second reflecting sheets 4 are affected by the shape of the lightguides 5.

As the first reflecting sheets 3 or the second reflecting sheets 4, it is possible to adopt (i) specular reflecting sheets onto which a substance having a high reflectance such as silver and aluminum is evaporated, (ii) white reflecting sheets having a diffuse reflection function, or (iii) reflecting sheets each of which is made up of the specular reflecting sheet and the white reflecting sheet which are stacked.

Among them, it is preferable to adopt PET-based white reflecting sheets which excel in thermal stability. The PET-based white reflecting sheets are broadly classified, by their compositions, into the following types: those made by adding white inorganic particles to PET; those made by adding, to PET, a resin (olefinic resin or the like) which is incompatible with PET; those made by impregnating PET sheets with carbonic acid gas or the like so as to foam the PET sheets; etc. Any type may be adopted.

In the case of the specular reflecting sheets, projections and depressions are provided on at least one side of each of the specular reflecting sheets, or a white material is applied thereon. This makes it possible to easily form a diffuse reflective layer in a desired area on at least one side of each of the specular reflecting sheets. Diffuse reflection due to minute projections and depressions makes it possible to prevent luminance unevenness on the light exit surface 5c more effectively. In particular, in a case where the minute projections and depressions are located near the first gaps 1, light is scattered by the minute projections and depressions so as to exit upward (i.e., toward a viewer). This makes it possible to increase a light utilization efficiency.

Examples of methods for providing the projections and depressions on each of the specular reflecting sheets encompass a method in which the projections and depressions are formed by injection molding, die molding, embossing, or the like, simultaneously with the formation of the specular reflecting sheets. Other methods encompass a method in which a surface of each of the specular reflecting sheets is subjected to prism processing, dot processing, or surface roughing by laser or the like.

In a case where the second reflecting sheets 4 serve as both-side reflecting sheets, both-side reflecting sheets may be adopted as the second reflecting sheets 4 as they are. Alternatively, single-sided reflecting sheets may be bonded to each other by a commercially-available adhesive (glue) or the like so as to be used as one second reflecting sheet 4.

In a case where both-side reflecting sheets are adopted as the second reflecting sheets 4 in the tandem-type illumination device 31, an order of providing each of the first reflecting sheets 3 and the corresponding second reflecting sheet 4 is preferably such that as illustrated in Fig. 2, first, the first reflecting sheet 3 is provided to that surface of the lightguide 5 which is opposite to the light exit surface 5c thereof, and then, the second reflecting sheet 4 is provided to that surface of the first reflecting sheet 3 which is opposite to the other surface thereof facing the lightguide 5. However, the order is not limited to this but may be altered as necessary.

The following further describes the liquid crystal display apparatus 51 of the one embodiment of the present invention, with reference to Figs. 3 and 4.

As illustrated in Fig. 3, the light sources 6 are arranged along ends of the lightguide sections 5a which are located on the far side with respect to the light-emitting sections 5b in the lightguides 5. A type of the light sources 6 is not particularly limited. In the present embodiment, light-emitting diodes (LED) are adopted as the light sources 6.

Each of the light sources 6 may be a white LED or three LEDs of the following respective colors: red (R), green (G), and blue (B). In a case where each of the light sources 6 is a white LED, costs can be advantageously reduced. In a case where each of the light sources 6 is made up of RGB-LEDs, a color reproduction range can be advantageously expanded.

Even if each of the light sources 6 is made up of RGB-LEDs, still, it is possible to emit white light from the light exit surface 5c. How colors of the light-emitting diodes are combined can be determined on the basis of chromogenic characteristics of the LEDs having respective different colors and that chromogenic characteristic of the surface light source device 41 which is required as to a purpose of use of the liquid crystal display apparatus 51. Instead of such light-emitting diodes, a side-light-type LED can be adopted as each of the light sources 6. The side-light-type LED is made by molding LED chips of respective different colors into one package.

In the present embodiment, a transmissive liquid crystal display panel which performs display by allowing light from the surface light source device 41 (backlight) to pass through is adopted as the liquid crystal display panel 21 illustrated in Fig. 4.

An arrangement of the liquid crystal display panel 21 is not particularly limited. That is, a publicly-known liquid crystal panel can be adopted as the liquid crystal display panel 21. Although this is not illustrated in the figures, the liquid crystal display panel 21 includes, e.g., an active matrix substrate on which a plurality of TFTs (thin film transistors) are provided, and a color filter substrate facing the active matrix substrate. A liquid crystal layer is sealed, by a seal material, in between the active matrix substrate and the color filter substrate.

The substrate 7 is a substrate for providing the light sources 6 thereon. For improvement of luminance, the substrate 7 is preferably white. On the back surface of the substrate 7 (i.e., the surface opposite to the surface on which the light sources 6 are provided), drivers are provided which are for controlling lighting of the LEDs which are the light sources 6, although this is not illustrated in figures. In other words, the drivers are provided on the substrate 7 on which the LEDs are provided. This makes it possible to reduce the number of substrates and the number of connectors etc. for connecting the substrates. This makes it possible to reduce costs of the liquid crystal display apparatus 51. Further, this realizes slimming down of the liquid crystal display apparatus 51 because less substrates are required.

The optical element 8 is made up of a diffusing plate and a multifunctional optical sheet. The multifunctional optical sheet has a plurality of optical functions selected from various optical functions including diffusion, refraction, light condensing, and polarization.

One example of the optical element 8 may be a diffusing plate having a thickness from approximately 2 to 3 mm which diffusing plate is located several millimeters away from the illumination device 31. However, the thickness of the diffusing plate and the distance between the diffusing plate and the illumination device 31 are not limited to this.

The diffusing plate is provided so as to cover the entire light-emitting surface made up of the contiguous light exit surfaces 5c. More specifically, the diffusing plate is provided on the light-emitting surface so as to face the light-emitting surface at a certain distance therefrom. The diffusing plate diffuses light emitted from the light-emitting surface.

Further, it may be arranged such that e.g., a multifunctional optical sheet such as a diffusing sheet, a prism sheet, and a polarized light reflecting sheet each of which has a thickness of approximately several hundred micrometers is stacked on the upper surface of the diffusing plate so that luminance uniformity can be obtained to the extent that the surface light source device 41 fulfills its function. The thickness and the arrangement are merely examples, and therefore, not limited to this.

The multifunctional optical sheet is made up of a plurality of sheets provided on the front surface of the lightguides 5. The multifunctional optical sheet is for uniformalizing and condensing light emitted from the light exit surfaces 5c so that the liquid crystal display panel 21 is irradiated with the light.

That is, it is possible to adopt, as the multifunctional optical sheet, a diffusing sheet for condensing and scattering light, a lens sheet for condensing light so as to increase a frontward luminance (i.e., luminance in the direction of the liquid crystal display panel 21), and/or a polarized light reflecting sheet for reflecting one polarization component of light and allowing other polarization component to pass therethrough, so as to increase a luminance of the liquid crystal display apparatus 51. It is preferable to use these sheets in combination in accordance with a price and performance of the liquid crystal display apparatus 51.

Thus, the surface light source device 41 provided in the liquid crystal display apparatus 51 of the one embodiment of the present invention includes the optical sheet.

This makes it possible to realize the surface light source device 41 which is slim and has a further improved uniformity of luminance on the light-emitting surface of the lightguides 5, even if a gap is defined on the light-emitting surface.

Further, the liquid crystal display apparatus 51 of the one embodiment of the present invention includes the surface light source device 41 as a backlight.

According to the arrangement, the liquid crystal display apparatus 51 includes the surface light source device 41 which is slim and excels in uniformity of luminance on the light-emitting surface. This makes it possible to realize a slim liquid crystal display apparatus 51 with a high display quality.

### [Embodiment 2]

The following describes Embodiment 2 of the present invention, with reference to Fig. 5. Arrangements other than those which are described in the present embodiment are the same as Embodiment 1. For convenience of explanation, members having the same function as those illustrated in the figures of Embodiment 1 are given the common reference signs, and the following does not repeat descriptions of such members.

Fig. 5 is an elevation view of an illumination device 31a provided in a liquid crystal display apparatus of another embodiment of the present invention. Specifically, Fig. 5 is an elevation view as viewed from the light exit surface 9c side of the illumination device 31a.

Each of lightguides 9 of the present embodiment includes a lightguide section 9a and a light-emitting section 9b, as is the case with the lightguides 5. In addition, as illustrated in Fig. 5, two of the lightguides 5 of Embodiment 1 are connected with each other in the direction D1 so as to constitute one lightguide 9.

In other words, one lightguide 9 is made up of a first sub-lightguide 9d and a second sub-lightguide 9e.

In the illumination device 31 a, each of the first reflecting sheets 3 is provided so as to cover that opposite surface of a corresponding one of the lightguides 9 which is opposite to the light exit surface 9c. Accordingly, a gap 10 which is defined between a first sub-lightguide 9d and a corresponding second sub-lightguide 9e is covered by a corresponding first reflecting sheet 3. Therefore, the adoption of such lightguides 9 makes it possible to reduce the first gaps 1 where no first reflecting sheet 3 is provided.

According to the present embodiment, each of second reflecting sheets 4 is provided so as to cover a corresponding first gap 1 and so as to extend between corresponding two lightguides 9. Further, each of the second reflecting sheets 4 is provided so as to extend in the direction D2 in a corresponding second gap 2. Preferably, each of the second reflecting sheets 4 is provided so as to cover a corresponding second gap 2.

The present embodiment describes, as one example, the lightguides 9 each of which is made up of two sub-lightguides. However, needless to say, the number of the sub-lightguides may be determined according to need. Note that the number of the sub-lightguides is preferably determined so that respective lengths of the first reflecting sheets 3 and the second reflecting sheets 4 do not cause problems such as difficulties in positioning and fixation of the first reflecting sheets 3 and the second reflecting sheets 4, a decrease in workability, and occurrence of a wrinkle.

### [Embodiment 3]

The following describes Embodiment 3 of the present invention, with reference to Figs. 6 and 7. Arrangements other than those which are described in the present embodiment are the same as Embodiment 1. For convenience of explanation, members having the same function as those illustrated in the figures of Embodiment 1 are given the common reference signs, and the following does not repeat descriptions of such members.

Fig. 6 is an elevation view of an illumination device 31b provided in a liquid crystal display apparatus of still another embodiment of the present invention. Specifically, Fig. 6 is an elevation view as viewed from the light exit surface 11a side of the illumination device 31b.

Fig. 7 is a fragmentary cross-sectional view of the illumination device 31b illustrated in Fig. 6 which fragmentary cross-sectional view is taken along the AA line in Fig. 6.

Each of the lightguides 11 is for emitting, via its light exit surface 11c, light emitted from a corresponding light source 6, in a surface-emitting manner. A light-emitting surface made up of contiguous light exit surfaces 11a is a surface for irradiating an irradiation target with light.

Since other members are arranged substantially in the same way as Embodiment 1, the following does not repeat descriptions of such members.

According to the present embodiment, at least two lightguides 11 constitute the illumination device 31b. That is, in the illumination device 31b, a plurality of combinations each made up of a lightguide 11 and a light source 6 are arranged on the same plane

Further, as illustrated in Figs. 6 and 7, the lightguides 11 are arranged in lines on the same plane so as not to overlap each other, in the illumination device 31 b of the present embodiment. The light-emitting surface is thus made up of the light exit surfaces 11a of the plurality of lightguides 11.

Further, as illustrated in Fig. 6, the lightguides 11 each of which has two light sources 6L and 6R (a pair of point-like light sources) are arranged in lines vertically and horizontally. In the illumination device 31b, the plurality of lightguides 11 each having two light sources 6L and 6R are thus arranged as if tiles are laid fitly. For this arrangement, the illumination device 31b is called tile-type illumination device.

It may also be arranged such that the light sources 6L and 6R are located in the center of each of the lightguides 11, or located beside the four sides thereof.

The present embodiment describes, as one example, the arrangement such that the two light sources 6L and 6R are located near the centers of the two opposed sides of each of the rectangular lightguides 11, respectively. However, needless to say, the number of the light sources and how the light source are located may be determined according to need.

As illustrated in Fig. 6, referred to as direction D2 is a direction in which two light sources 6L and 6R are opposed in each of the rectangular lightguides 11. On the other hand, referred to as direction D1 is a direction intersecting with (substantially perpendicular to) the direction D2.

As illustrated in Fig. 7, a light source 6L and a light source 6R are provided respectively inside two hollow recess sections 11b of each of the lightguides 11 so as to face each other. The light sources 6L and 6R are mounted on the substrate 12. As illustrated in Fig. 7, respective light emission directions of two light sources 6L and 6R are set so that light from one light source is emitted toward the other light source.

Thus, according to the arrangement, two opposed light sources 6L and 6R are provided in each of the lightguides 11.

With the arrangement such that two light sources 6L and 6R are opposed to each other so that light therefrom enters the inside of the lightguide 11, light-emitting regions formed respectively by the light sources 6L and 6R overlap each other so that light is emitted from the entire light exit surface 11a of the lightguide 11. According to the present embodiment, the adoption of the illumination device 31b makes it possible to realize a large backlight having no dark area.

As described above, light emitted from the light sources 6L and 6R is repeatedly scattered and reflected, while propagating through the lightguide 11, and then, emitted from the light exit surface 11a, so as to reach the liquid crystal display panel 21 via the optical element 8 (not illustrated).

However, the tile-type illumination device 31b also has the problem of occurrence of the first gaps 1. That is, in the illumination device 31b, each of the first reflecting sheets 3 is provided on that opposite surface of a corresponding lightguide 11 which is opposite to the light exit surface 11a thereof, so as to cover a region between two adjacent substrates 12, as illustrated in Figs. 6 and 7. Accordingly, a first gap 1 where no first reflecting sheet 3 is provided is defined between two adjacent lightguides 11 that do not overlap each other.

According to the present embodiment, in view of this, each of the second reflecting sheets 4 is provided so as to cover a part of the first gap 1 which part is not covered by a corresponding substrate 12, as indicated by the shaded areas in Fig. 6. Specifically, each of the second reflecting sheets 4 is provided so as to cover a corresponding first gap 1 which is defined between two lightguides 11 which are adjacent to each other in the direction D1 so as not to overlap each other, because no substrate 12 is provided in the first gap 1,

In contrast, no second reflecting sheet 4 is provided in a first gap 1 which is defined between two lightguides 11 which are adjacent to each other in the direction D2 so as not to overlap each other, because a corresponding substrate 12 covers the first gap 1. The substrates 12 are preferably white so as to increase a luminance on the light exit surfaces 11a by reflecting emitted light from the light sources 6R and 6L. More preferably, the substrates 12 have a reflecting function which is equivalent to that of the second reflecting sheets 4.

The arrangement makes it possible to realize an illumination device which is slim and has a further improved uniformity of luminance on a light-emitting surface, even in a case where a gap is defined between two adjacent lightguides in an illumination device (tile-type illumination device) in which lightguides are arranged so as not to overlap each other.

Also in the case of the tile-type illumination device 31b, it is possible to obtain an effect of increasing a reflectance of the first reflecting sheets 3, by adopting a stacked structure such that a first reflecting sheet 3 and a second reflecting sheet 4 overlap each other at least partially. The effect is increased as an area of the stacked structure is increased by increasing an area of the second reflecting sheet 4. That is, from a viewpoint of an increased reflectance of the first reflecting sheets 3 and improved uniformity of reflectance of the first reflecting sheets 3, it is preferable to adopt any one of the following arrangements also in the tile-type illumination device 31 b in order that the back surface of each of the lightguides 11 does not have a region where only a first reflecting sheet 3 is provided: (i) the second reflecting sheets 4 are provided so as to be immediately adjacent to each other in the direction D1, without having any gap therebetween; and (ii) the second reflecting sheets 4 are provided so that two adjacent second reflecting sheets 4 overlap each other in the direction D1.

In each of the illumination devices 31, 31a, and 31b, as illustrated in Figs. 2 and 7, each of the first reflecting sheets 3 is preferably bonded to a corresponding lightguide 5 (or 11) via an bonding layer 13 (first bonding section).

In a case where a gap is defined between a first reflecting sheet 3 and the back surface of a corresponding lightguide 5 (or 11), a loss of light is larger than in a case where no such gap is defined. This decreases a luminance efficiency. Therefore, by closely bonding the first reflecting sheet 3 and the back surface of the lightguide 5 (or 11) to each other via the bonding layer 13, it becomes possible to increase a luminance efficiency.

In order to increase a luminance efficiency by closely bonding the first reflecting sheet 3 and the back surface of the lightguide 5 (or 11) to each other, it is also possible to bond the first reflecting sheet 3 to the back surface of the lightguide 5 (or 11) at its edge portion (i.e., at its outer periphery).

Further, in each of the illumination devices 31, 31a, and 31 b, as illustrated in Figs. 2 and 7, each of the first reflecting sheets 3 is preferably bonded to a corresponding second reflecting sheet 4 via a bonding layer 14 (second bonding section).

In a case where a first reflecting sheet 3 and a corresponding second reflecting sheet 4 are stacked at least partially, and a gap is defined therebetween, a loss of light is larger than in a case where no such gap is defined. This decreases a luminance efficiency. For this reason, each of the first reflecting sheets 3 and a corresponding second reflecting sheet 4 are bonded to each other via the bonding layer 14. This increases a luminance efficiency.

Further, as illustrated in Figs. 2 and 7, each of the second reflecting sheets 4 is preferably bonded, via a bonding layer 15 (third bonding section), to the substrate 7 (or 16) on which the lightguides 5 (or 11) are mounted.

In a case where a second reflecting sheet 4 provided on the back surface of a corresponding lightguide 5 (or 11) is uplifted from the substrate 7 (or 16) on which the lightguides 5 (or 11) are mounted, a loss of light is caused in the uplifted region. For this reason, each of the second reflecting sheets 4 and the substrate 7 (or 16) are bonded to each other via the bonding layer 15. This increases a luminance efficiency.

In each of the illumination devices 31, 31a, and 31b, at least each of the first reflecting sheets 3 and a corresponding second reflecting sheet 4 preferably overlap each other at a position corresponding to a relatively dark area of the light exit surface 5c, 9c, or 11a of the lightguide 5, 9, or 11.

According to the arrangement, at least each of the first reflecting sheets 3 and a corresponding second reflecting sheet 4 overlap each other in a relatively dark area of the light exit surface 5c, 9c, or 11a of the lightguide 5, 9, or 11 in which dark area light is unlikely to reach due to directionality of the light sources 6, 6L, or 6R. The dark area is, e.g., a region with a light emission smaller than a light emission obtained by averaging light emission measurements at several locations on the light exit surface 5c, 9c, or 11a.

This makes it possible to increase a reflectance in such a region with a smaller light emission. This makes it possible to further increase uniformity of luminance on the light exit surfaces of the lightguides.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### Industrial Applicability

The present invention is applicable to: an illumination device which is adopted as, e.g., a backlight of a liquid crystal display apparatus; a surface light source device including the illumination device; and a liquid crystal display apparatus including the surface light source device.

Reference Signs List
- 1, 2, and 10: Gap
- 3: First reflecting sheet
- 4: Second reflecting sheet
- 5, 9, and 11: Lightguide
- 5a and 9a: Lightguide section
- 5b and 9b: Light-emitting section
- 5c, 9c, and 11a: Light exit surface
- 6, 6L, and 6R: Light source
- 7 and 16: Substrate
- 8: Optical element
- 13: Bonding layer (First bonding section)
- 14: Bonding layer (Second bonding section)
- 15: Bonding layer (Third bonding section)
- 31, 31a, and 31b: Illumination device
- 41: Surface light source device
- 51: liquid crystal display apparatus

## Claims

1. An illumination device comprising:
a plurality of combinations each made up of a light source and a lightguide for diffusing light from the light source so as to emit the light in a surface emitting manner from a light exit surface of the lightguide;
first reflecting sheets each of which is provided so as to cover an opposite surface of a corresponding one of the lightguides, the opposite surface being opposite to the light exit surface; and
second reflecting sheets each of which is provided, on an opposite surface side, over a corresponding one of first gaps, each of which first gaps is defined between adjacent two of the lightguides that do not to overlap each other, each of the second reflecting sheets covering at least a region where no first reflecting sheets is provided in the corresponding one of the first gaps, and being extended over the adjacent two of the lightguides.

2. An illumination device comprising:
a plurality of combinations each made up of a light source and a lightguide for diffusing light from the light source so as to emit the light in a surface emitting manner from a light exit surface of the lightguide, any adjacent two of the lightguides not overlapping each other;
first reflecting sheets each of which is provided so as to cover an opposite surface of a corresponding one of the lightguides, the opposite surface being a surface opposite to the light exit surface;
and
second reflecting sheets each of which is provided on an opposite surface side so as to cover a corresponding one of first gaps, the corresponding one of the first gaps, each of which first gaps is defined between adjacent two of the lightguides.

3. An illumination device comprising:
a plurality of combinations each made up of a light source and a lightguide for diffusing light from the light source so as to emit the light in a surface emitting manner, each of the lightguides having: a light-emitting section having a light exit surface; and a lightguide section which guides, to the light-emitting section, light from a corresponding one of the light sources, and each of the lightguides overlapping each other in such a manner that a light-emitting section of one of adjacent two lightguides overlaps a lightguide section of the other one of the adjacent two lightguides;
first reflecting sheets each of which is provided so as to cover an opposite surface of a corresponding one of the lightguides, the opposite surface being opposite to the light exit surface; and
second reflecting sheets each of which is provided, on an opposite surface side, over at least a corresponding one of first gaps, each of which first gaps is defined between adjacent two of the lightguides that do not to overlap each other.

4. The illumination device as set forth in any one of claims 1 to 3, wherein the first reflecting sheets and the second reflecting sheets associated therewith overlap each other at least partially and correspondingly.

5. The illumination device as set forth in claim 3, wherein:
each of the lightguides overlaps each other in such a manner that a light-emitting section of one of adjacent two lightguides is in contact with a lightguide section of the other one of the adjacent two lightguides via a contact surface; and each of the second reflecting sheets covers at least a part of the contact surface.

6. The illumination device as set forth in claim 3 or 5, wherein:
each of the lightguides overlaps each other in such a manner that a light-emitting section of one of adjacent two lightguides is in contact with a lightguide section of the other one of the adjacent two lightguides via a/the contact surface; and
each of the second reflecting sheets covers at least a part of the contact surface, the part being above a corresponding light source which is provided for the lightguide section corresponding to the contact surface.

7. The illumination device as set forth in any one of claims 3, 5, and 6, wherein each of the second reflecting sheets is a both-side reflecting sheet.

8. The illumination device as set forth in any one of claims 1, 3, and 5 to 7, wherein each of the second reflecting sheets is extended to a corresponding one of second gaps each of which is defined between adjacent two of the lightguides overlapping each other.

9. The illumination device as set forth in any one of claims 1 to 8, wherein:
the lightguides are arranged in such a manner that they do not overlap with their neighbors adjacent thereto in a direction;
at least two of the second reflecting sheets are arranged in the direction; and
the at least two of the second reflecting sheets are provided so as to have no gap therebetween.

10. The illumination device as set forth in any one of claims 1 to 9, wherein each of the first reflecting sheets is bonded to a corresponding one of the lightguides via a first bonding section.

11. The illumination device as set forth in claim 10, wherein each of the first reflecting sheets is bonded to a corresponding one of the lightguides via the first bonding section at an edge portion of the opposite surface of the corresponding one of the lightguides.

12. The illumination device as set forth in any one of claims 1 to 11, wherein each of the first reflecting sheets is bonded to a corresponding one of the second reflecting sheets via a second bonding section.

13. The illumination device as set forth in any one of claims 1 to 12, wherein each of the second reflecting sheets is bonded, via a third bonding section, to a substrate to which the lightguides is mounted.

14. A surface light source device comprising:
an illumination device recited in any one of claims 1 to 13; and
an optical member being provided on or above a light-emitting surface of the illumination device.

15. A liquid crystal display apparatus comprising, as a backlight, a surface light source device recited in claim 14.

16. An illumination device comprising:
a plurality of combinations each made up of a light source and a lightguide for diffusing light from the light source so as to emit the light in a surface emitting manner from a light exit surface of the lightguide;
first reflecting sheets each of which is provided so as to cover an opposite surface of a corresponding one of the lightguides, the opposite surface being opposite to the light exit surface; and
second reflecting sheets each of which is provided, on an opposite surface side, over a corresponding one of first gaps, each of which first gaps is defined between adjacent two of the lightguides that do not to overlap each other, each of the second reflecting sheets covering at least a region where no first reflecting sheets is provided in the corresponding one of the first gaps.

17. The illumination device as set forth in any one of claims 1 to 3, and 16, wherein:
on the opposite surface side, the first reflecting sheets and the second reflecting sheets associated therewith overlap each other correspondingly at a position corresponding to a relatively dark area of the light exit surface of the corresponding one of the lightguides.
